# EUROPEAN PATENT APPLICATION

(11) **EP 2 357 296 A2**
(43) Date of publication of application: **17.08.2011**
(21) Application number: 11386002.7
(22) Date of filing: 11.02.2011
(51) Int. Cl.: E04D 13/12, F24J 2/52

(54) **Mounting device for tile roofs**

(30) Priority: 16.02.2010 GR 2010100089
(71) Applicant: DELAVERIDIS, ioannis, P.C. 59100 Veria (GR)
(72) Inventor: DELAVERIDIS, ioannis, P.C. 59100 Veria (GR)

(57) **Abstract**

A mounting made of metal which is fixed to a roof formwork, said mounting going between the tiles and protruding on the surface without disturbing the basic structure of the tile roof.

## Description

The mounting is metal elements which are attached to the tile roof formwork, pass the intermediate tiles and protruding on the surface without disturbing the basic structure of the tile roof. The projections of mounting is based on the metal frame is attached to the different panels. Up to now similar support bases do not solve the problems encountered in implementing their roofs where there is differentiation of formwork, different sizes and types of tile such as European, Byzantine, Roman. These problems are being tackled with a new system of support base which is a new technical rule of construction, which gives us the following advantages:
1st. The support base adapted according to the types of tile and regardless of the placement.
2nd. Regardless of configuration, the surface of the projecting part is always parallel to the total area of the roof.
3rd. In the same mounting point of the base support formwork may take different positions executives (2) and (3) along the part.

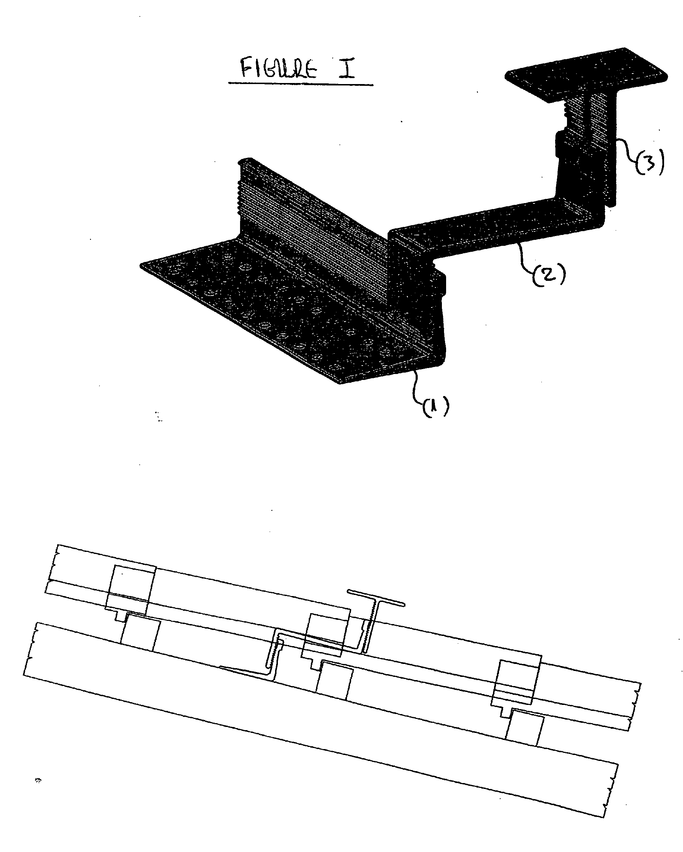

Figure 1 shows an open side of the base support for tile roof.

In figure 1 is distinguished the angular strain (1) of which one side is adapted to the formwork. On the other is adapted the part (2), which passes in between the tiles. Accessory (2) may be attached to the attachment (1) at any point along. The mounting points of (1) to (2) and (2) to (3) parallel dentitions exist in order to ensure parallel movement of height and width as well as giving the mounting resistance to slippage when vertical load is applied. Detailed features are not addressed in this description because it and the plan (drawing) are indicative. The support base can be constructed in the desired form, shape, size and different materials for each specific need, without changing the basic principle of invention.

## Claims

1. The mounting consists of an angular strain (1) (Figure I), whose side attached to the formwork. On the other side of the angular strain adapted accessory (2) which passes from the intermediate tiles. And finally, part (3) adjusting the accessory (2).

2. The mounting according to claim (1.) **characterized by** the ability of the accessory (2) be fastened to attachment (1) at any point of its length.

3. The mounting according to claims (1.) and (2.) **characterized by** the ability of points of attachment of components of (1) to (2) and (2) to (3), to bind to desired heights.

4. The mounting according to claims (1.), (2.) and (3.) is also **characterized by** the parallel dents to points of attachment of components, so that any shift in the peg has assured the parallel components.
